# EUROPÄISCHE PATENTSCHRIFT

(11) **EP 0 536 191 B1**
(45) Veröffentlichungstag und Bekanntmachung des Hinweises auf die Patenterteilung: **30.03.1994**
(21) Anmeldenummer: 91911247.4
(22) Anmeldetag: 15.06.1991
(51) Int. Cl.: B60G 7/00, B60G 3/26, B62D 17/00

(54) **VORRICHTUNG ZUR AKTIVEN VERSTELLUNG EINES KRAFTFAHRZEUGRADES**
DEVICE FOR THE ACTIVE ADJUSTMENT OF A MOTOR VEHICLE WHEEL
DISPOSITIF DE REGLAGE ACTIF DE LA ROUE D'UN VEHICULE A MOTEUR

(30) Priorität: 28.06.1990 DE 4020547
(43) Veröffentlichungstag der Anmeldung: 14.04.1993
(73) Patentinhaber: Dr.Ing.h.c. F. Porsche Aktiengesellschaft, 70435 Stuttgart (DE)
(72) Erfinder: LUGER, Martin, D-7250 Leonberg (DE)
(86) Internationale Anmeldenummer: EP9101114
(87) Internationale Veröffentlichungsnummer: WO9200201

(56) Entgegenhaltungen:
- EP-A- 278 095
- EP-A- 307 547
- EP-A- 378 028
- DE-A- 2 855 105
- DE-A- 3 139 792
- GB-A- 2 178 707
- GB-A- 2 203 711
- US-A- 4 700 972

## Beschreibung

Die Erfindung bezieht sich auf eine Vorrichtung zur aktiven Verstellung eines Kraftfahrzeugrades nach dem Oberbegriff des Anspruchs 1.

Es ist aus der DE-C-31 39 792 eine Radaufhängung mit einer Stelleinrichtung zur Radsturz- und -spuränderung bei bestimmten Fahrzuständen bekannt. Die Verstellung erfolgt über Hydraulikzylinder, die teilweise in den Lenker integriert sind bzw. einen Teil des Radführungslenkers bzw. des Lenkerlagers. darstellen und somit relativ großen Kräften ausgesetzt sind, die ansonsten nur von den Lenkerlagern aufgenommen werden.

Aus der dem Oberbegriff des Anspruchs 1 entsprechenden GB-A-2 203 711 ist eine Vorrichtung zum Steuern des Sturzes der Hinterräder bei Fahrzeugen mit vier lenkbaren Hinterrädern bekannt, die ein Verbindungsglied umfasst. Dies ist am Fahrzeugaufbau schwenkbar befestigt und weist eine mittige Schwenklagerung für einen am Radträger abgestützten und gelagerten Radführungslenker auf. Am unteren der Aufbaulagerung abgekehrten Ende des Verbindungsgliedes greift ein als Stellelement ausgebildeter Hydraulikzylinder an, der eine Sturzverstellung des Rades über das Verbindungsglied bewirkt.

Aufgabe der Erfindung ist es, eine Radaufhängung für ein Kraftfahrzeug mit einer Radstelleinrichtung zu schaffen, die wenig Bauraum beansprucht, ein günstiges Ansprechverhalten aufweist und übermäßige Kräfte von der Stelleinrichtung fernhält.

Diese Aufgabe wird erfindungsgemäß durch die kennzeichnenden Merkmale des Anspruchs 1 gelöst. Weitere vorteilhafte Merkmale beinhalten die Unteransprüche.

Die mit der Erfindung hauptsächlich erzielten Vorteile bestehen darin, daß durch die von der Steuerstange der Verstelleinrichtung getrennte Anlenkung des Radführungselements am Radträger auch die Kräfte, insbesondere die Längskräfte, getrennt aufgenommen werden können, so daß eine hiervon unbeeinflußte Radverstellung, wie Sturz, Vorspur und Nachspur durchzuführen ist. Hierdurch ergibt sich insbesondere bei Kurvenfahrt und/oder Spurwechsel ein schnellerer Seitenkraftaufbau. Bei Geradeausfahrt und insbesondere in Verbindung mit hohen Geschwindigkeiten kann durch minimale Radstellungsänderungen über den Federweg ein niederer Reifenluftdruck gefahren werden, was eine deutliche Komforterhöhung ergibt.

Die Stelleinrichtung für die Räder einer Achse ist so ausgebildet, daß sie für Hinter- und Vorderachsen gleichermaßen verwendbar ist. Eine Radverstellung erfolgt in einfacher Weise über einen Hydraulikzylinder, kann aber auch über einen Motor wie z.B. einen E-Motor oder einen anderweitig angetriebenen Motor erfolgen.

Über ein am Radträger mittels eines Kugelgelenks gelagerten Kipphebel ist die Steuerstange der Stelleinrichtung sowie ein Radführungslenker um eine in Fahrzeuglängsrichtung verlaufende horizontale Achse schwenkbar gelagert. Diese Doppellagerung ergibt ein Aufnehmen der Längskräfte alleinig über das Lenkerlager und das Spurstangenlager ist von Belastungen aus diesen Kräften frei.

Die Verbindung der Steuerstange der Stelleinrichtung mit dem Stellglied kann unter Zwischenschaltung eines zweiarmigen gelagerten Hebels erfolgen. Über diesen besteht die Möglichkeit, die Radstellwege festzulegen, in denen der Winkel zwischen den beiden unter einem Winkel stehenden Hebelarmen vergrößert bzw. verringert wird. Hierdurch können die Räder während der Fahrt unterschiedlich verstellt werden, was insbesondere bei Kurvenfahrt von Vorteil ist, um unterschiedliche Seitenführungskräfte aufzubauen.

Die Stelleinrichtung ist auch für Fahrzeuge mit Hinterradlenkung geeignet, bei der über den unteren Radführungslenker auch eine Spurstange für ein Lenkgetriebe am Radträger gehalten ist.

Bei Fahrzeugen mit einem Heckmotor ist aus Raumgründen kein Platz für eine oberhalb der Raddrehachse angeordnete Stelleinrichtung. Diese wird dann unterhalb der Raddrehachse angeordnet und eine Verbindung mit der oberhalb der Raddrehachse angeordneten Steuerstange erfolgt dann über einen Umlenkhebel.

Das Stellglied, wie z.B. ein Hydraulikzylinder oder ein Motor, können über ein elektronisches Steuergerät, das die einzelnen Fahrparameter verarbeitet, angesteuert werden. Es können sowohl die einzelnen Fahrparameter als auch speziell kombinierte Fahrparameter und alle Fahrparameter insgesamt verwendet werden.

In Abhängigkeit der Radverstellung von Federungsbewegungen des Rades kann z.B. der untere Radführungslenker mit einer den Federweg aufnehmenden Einrichtung verbunden sein, die den Hydraulikzylinder entsprechend zu Radstellungsänderungen ansteuert.

Ausführungsbeispiele der Erfindung sind in der Zeichnung dargestellt und werden im folgenden näher beschrieben.
Es zeigen
- Fig. 1: eine Radaufhängung mit einer Stelleinrichtung in einer Vorderansicht,
- Fig. 2: eine Seitenansicht der Radaufhängung gemäß Fig. 1 mit einer dargestellten Schwenkachse,
- Fig. 2a: eine Draufsicht der Radaufhängung gemäß der Fig. 1 und 2,
- Fig. 3: eine Ausführung einer Radaufhängung gemäß Fig. 1 in einer Vorderansicht mit einem zweiarmigen Hebel zwischen Stellglied und Steuerstange,
- Fig. 4: eine schaubildliche Darstellung der Radaufhängung gemäß Fig. 3,
- Fig. 5: eine weitere Ausführung einer Radaufhängung in einer Vorderansicht mit einer unterhalb des oberen Radführungsgliedes angeordneten Stelleinrichtung,
- Fig. 6: eine weitere Ausführung einer Radaufhängung für ein Fahrzeug mit Heckmotor, bei der das Stellglied unterhalb der Raddrehachse angeordnet ist, und
- Fig. 7: eine Darstellung einer Stelleinrichtung mit einer möglichen Ansteuerung über ein elektronisches Steuergerät in gestrichelten Linien und in einer weiteren Ausführung über eine Federungs-Stellvorrichtung in ausgezogenen Linien.

Eine Radaufhängung 1 umfaßt zur aktiven Verstellung der Räder 2 einer Achse in Richtung Vor- und Nachspur sowie des Sturzes eine Einrichtung 3 mit einem Stellglied 4, das über eine Steuerstange 5 am Radträger 6 angreift. Ein Verschwenken des Rades 2 erfolgt um eine Achse X-X, die durch ein Gelenk 7 eines unteren Radführungslenkers 8 sowie durch ein Gelenk 9 einer Spurstange 10 festgelegt ist. Diese Achse X-X kann entsprechend der gewünschten Einstellwerte unter einem Winkel α von 0 bis 90° angestellt werden.

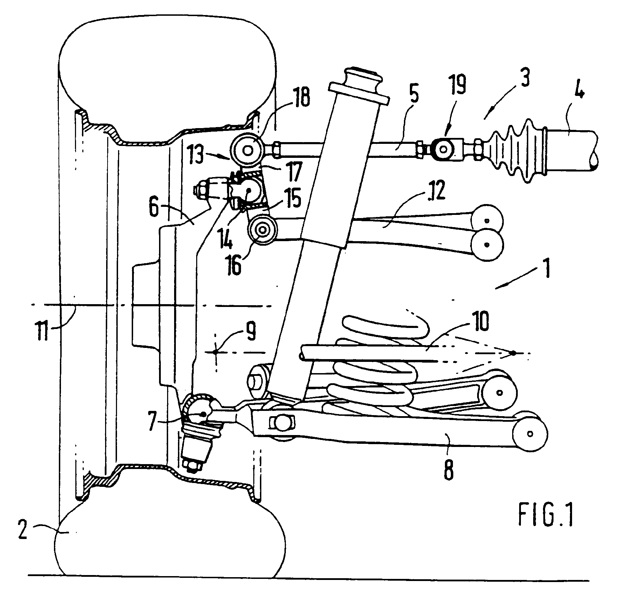

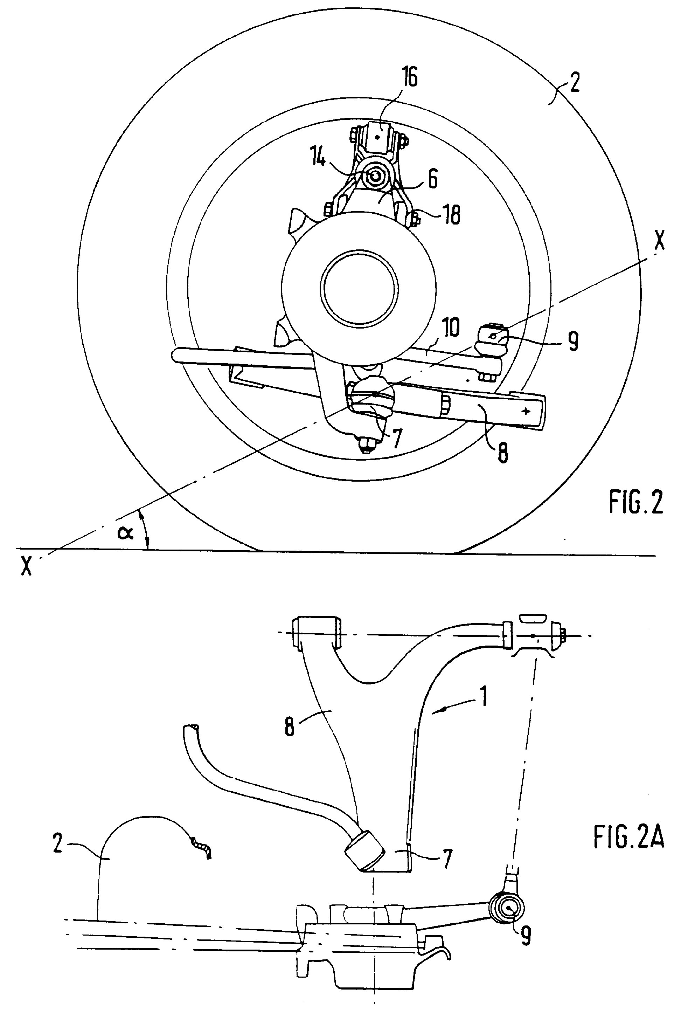

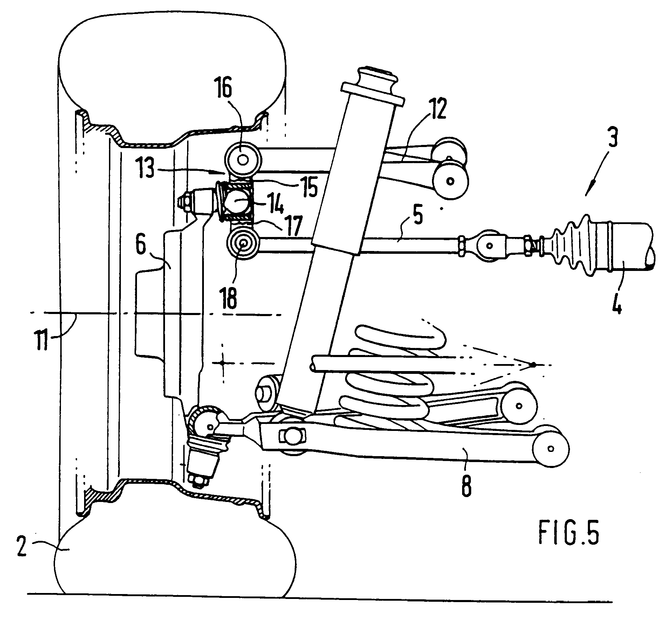

Nach den Ausführungen gemäß der Fig. 1 bis 3 ist die Steuerstange 5 der Stelleinrichtung 3 oberhalb der Raddrehachse 11 liegend und benachbart des oberen Radführungslenkers 12 angeordnet. Bei dieser Ausführung ist die Spurstange 5 der Stelleinrichtung 3 in einer Ebene oberhalb des Radführungslenkers 12 vorgesehen. Sie kann mit der Stelleinrichtung 3 auch in einer Ebene unterhalb des oberen Radführungslenkers 12 angeordnet sein, was insbesondere Fig. 5 näher zeigt.

Die Steuerstange 5 sowie der obere Radführungslenker 12 sind am Radträger 6 über ein Kipphebelelement 13 gehalten, das mit dem Radträger 6 über ein Gelenk 14 verbunden ist. Zum Verbinden der Steuerstange 5 mit diesem Element 13 ist am freien Ende des ersten Hebelarmes 15 ein Schwenklager 16 mit einem in Fahrzeuglängsrichtung und etwa horizontal ausgerichteten Position 18 vorgesehen. Der Radführungslenker 12 ist am freien Ende des zweiten Hebelarmes 17 über ein weiteres, etwa entsprechend ausgerichtetes Schwenklager 18 abgestützt.

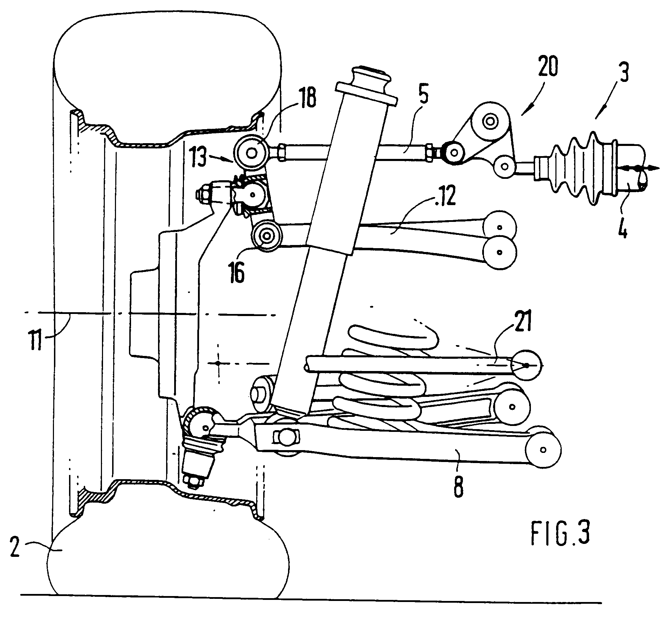

Die Verbindung zwischen der Steuerstange 5 und dem Stellglied 4 erfolgt entweder über ein einfaches Gelenk 19, wie z.B. in Fig. 1 dargestellt, oder über einen zweiarmigen Zwischenhebel 20 mit zwei Armen 20a und 20b, die unter einem Winkel β stehen, wie in den Fig. 3, 4 und 6 gezeigt ist.

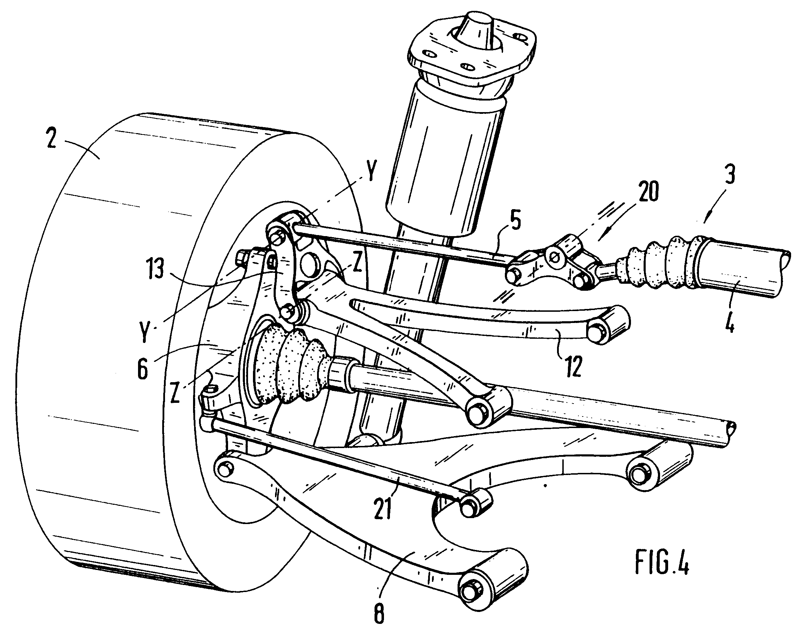

Nach Fig. 3 ist die Steuerstange 5 radträgerseitig am Kipphebelelement 13 mit dem Stellglied 4 über den Hebel 20 mit den zwei Armen 20a und 20b verbunden, was Fig. 4 in schaubildlicher Darstellung zeigt. Diese Anbindung der Spurstange 5 ermöglicht eine nahezu lineare Verschiebung der Steuerstange 5. Die unterhalb der Raddrehachse 11 auf dem Radträger 6 verbundene Spurstange 21 ist mit einem Lenkgetriebe verbunden, das nicht näher dargestellt ist.

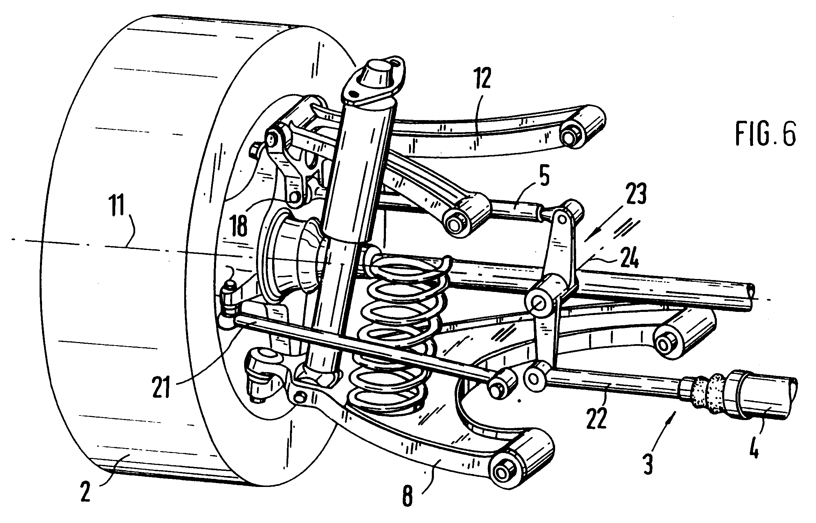

Nach einer weiteren Ausführung gemäß Fig. 6 ist zur Erzielung eines Freiraumes zur Aufnahme eines Motors zwischen den Rädern 2 einer Achse die Stelleinrichtung 3 mit dem Stellglied 4 in einer Ebene unterhalb der Raddrehachse 11 verlegt, wobei die Steuerstange 5 der Einrichtung 3 in einer Ebene oberhalb der Raddrehachse 11 liegt. Eine Verbindung von einer Kolbenstange 22 des Stellgliedes 4 mit der Stange 5 erfolgt über einen etwa senkrecht stehenden zweiarmigen Hebel 23, der um eine in Fahrzeuglängsrichtung horizontal ausgerichtete Achse 24 schwenkbar ist.

Eine Radstellungsänderung erfolgt in Abhängigkeit von Fahrparametern wie Lenkwinkel, Geschwindigkeit, Querbeschleunigung, Längsverzögerung, Längsbeschleunigung, Giermoment und Federung. Entsprechend dieser Parameter kann das Stellglied 4, wie z.B. der Hydraulikzylinder oder ein Motor, angesteuert werden. Nach einer Ausführung ist jedem Rad 2 einer Achse ein Stellglied 4 zugeordnet. Hierdurch wird es möglich, jedes Rad 2 separat, je nach der Erfordernissen, z.B. bei Kurvenfahrt getrennt voneinander, zu verstellen.

Eine getrennte Verstellung der Räder 2 einer Achse wird auch durch den zweiarmigen Hebel 20 zwischen Steuerstange 5 und Stellglied 4 erreicht, indem die beiden Arme 20a und 20b des Hebels 20 unter verschiedenen Winkeln 8 zueinander angestellt werden und sich somit ein unterschiedliches Weg-Übersetzungsverhältnis vom linken zum rechten Rad ergibt.

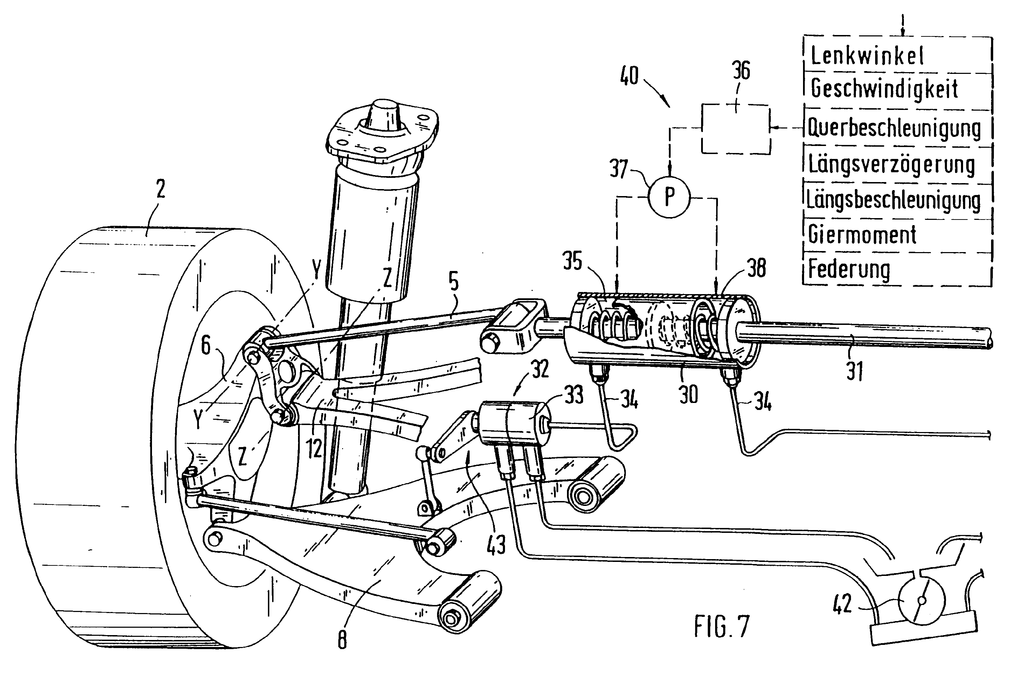

Desweiteren ist es auch möglich, wie Fig. 7 zeigt, einen doppelt wirkenden Hydraulikzylinder 30 als Stellglied 4 zu verwenden. Dieser weist eine durchgehende, mit der Steuerstange 5 der beiden Räder 2 einer Achse verbundene Kolbenstange 31 auf. Nach einer ersten Ausführung der Ansteuerung, in Fig. 7 in ausgezogenen Linien dargestellt, weist der untere Radführungslenker 8 eine den Federweg aufnehmende Stelleinrichtung 43 auf. Diese umfaßt jeweils eine von einer Druckübersetzungseinrichtung 33 ausgehende Druckleitung 34, die jeweils in eine Kammer 35 des doppelt wirkenden Hydraulikzylinders einmündet auf, wobei der Druck des Mediums bewirkt eine Verschiebung des Kolbens und somit eine Radverstellung bewirkt.

Nach einer weiteren Ausführung ist in Fig. 7 in gestrichelten Linien eine elektronische Steuereinheit 40 dargestellt. Diese umfaßt im wesentlichen ein Steuergerät 36, dem die Fahrparameter einzeln, kombiniert oder insgesamt zugeführt werden und von dem ausgangsseitig entsprechende Signale der Pumpe 37 zugeleitet werden, die dann das Medium den beiden Kammern 35 und 38 zuleitet. Da bei einer Hinterradlenkung am Fahrzeug diese Fahrparameter zur Verfügung stehen, ist es ohne großen Aufwand möglich, die Räder einer Achse in Abhängigkeit von diesen Parametern zu verstellen.

## Patentansprüche

1. Vorrichtung zur aktiven Sturz- und/oder Spurverstellung eines Kraftfahrzeugrades (12) über eine ein Stellglied (4) umfassende Verstelleinrichtung (3) bei der Radführungsglieder (8 und 12) an einem Radträger (6) angelenkt und am Fahrzeugaufbau schwenkbar gehalten sind und das Stellglied (4) über ein angeschlossenes Zwischenelement (13) mit dem Radträger (6) auf diesen verstellend einwirkend verbunden ist, dadurch gekennzeichnet, daß das Zwischenelement (13) über ein mittiges Kugelgelenk (14) unmittelbar am Radträger (6) verkippbar angelenkt ist und über ein erstes Lager (18) mit einer Steuerstange (5) der Verstelleinrichtung (3) und über ein zweites Lager (16) mit einem Radführungsglied (12) verbunden ist; wobei die Verstelleinrichtung (3) ein Stellglied (4) umfasst, das mit der Steuerstange (5) verbunden ist und in Abhängigkeit von Fahrparametern wie Radfederungsweg (F), Querbeschleunigung (Q), Geschwindigkeit (V), Längsbeschleunigung (B), Verzögerung (L), Gierungen (G) und Lenkeinschlagwinkel (W) über eine Steuereinheit (40) die Stellung des Rades beeinflussend aus- und einfahrbar ausgebildet ist;und das Rad (12) um eine unterhalb der Raddrehachse (11) durch ein radträgerseitiges Spurstangengelenk (9) und ein radträgerseitiges Lenkergelenk (7) gebildete Schwenkachse (X-X) verstellbar ist.

2. Vorrichtung nach Anspruch 1, dadurch gekennzeichnet, daß die Steuerstange (5) an dem am Radträger (6) angelenkten Zwischenelement (13) gehalten ist, das an seinem oberen freien Ende die Steuerstange (5) in dem ersten Lager (18) mit der Achse (Y-Y) gelenkig hält und an seinem unteren freien Ende den Radführungslenker (12) in dem zweiten Lager (16) mit der Schwenkachse (Z-Z) abstützt.

3. Vorrichtung nach Anspruch 1, dadurch gekennzeichnet, daß die Steuerstange (5) an dem am Radträger (6) angelenkten Zwischenelement (13) gehalten ist, das an seinem oberen freien Ende den Radführungslenker (12) in dem zweiten Lager (16) abstützt und an seinem unteren freien Ende die Steuerstange (5) in dem ersten Lager (18) gelenkig hält.

4. Vorrichtung nach den Ansprüchen 1, 2 oder 3, dadurch gekennzeichnet, daß zwischen dem Stellglied (4) und der Steuerstange (5) ein Zwischenhebel (20) angeordnet ist, der zwei Arme (20a und 20b) umfasst, die unter einem Winkel (β) zueinander stehen.

5. Vorrichtung nach Anspruch 4, dadurch gekennzeichnet, daß jeder Radseite einer Achse zwischen der Steuerstange (5) und dem Stellglied (4) der Zwischenhebel (20) mit den Armen (20a und 20b) zugeordnet ist, die unter unterschiedlichen Winkeln (β) zueinander stehen.

6. Vorrichtung nach Anspruch 1, dadurch gekennzeichnet, daß die Anstellung der Schwenkachse (X-X) von der Lage des radträgerseitigen Gelenks (7) des unteren Radführungslenkers (8) und von der Lage des radträgerseitigen Gelenks (9) der Spurstange (10) bestimmbar ist und ein Verhältnis von Sturz zu Vorspur am Rad (2) definiert festlegbar ist.

7. Vorrichtung nach Anspruch 1 und einem der vorhergehenden Ansprüche, dadurch gekennzeichnet, daß zur Erzielung einer Vorspurverstellung am Rad (2) die Schwenkachse (X-X) eine Anstellung von α = 90° aufweist.

8. Vorrichtung nach Anspruch 1, dadurch gekennzeichnet, daß das Stellglied (4) in einer unterhalb der Raddrehachse (11) angeordneten Ebene gelagert und mit einem zweiarmigen Hebel (23) verbunden ist, der sich in einer etwa senkrechten Ebene erstreckt und mit seinem der Lagerung des Stellgliedes (4) abgekehrten freien Ende mit der Steuerstange (5) verbunden ist, die am Radträger (6) über das Lager (18) oberhalb der Raddrehachse (11) angelenkt ist.

9. Vorrichtung nach einem der vorhergehenden Ansprüche, dadurch gekennzeichnet, daß mit dem unterhalb der Raddrehachse (11) angeordneten Radführungslenker (8) jeder Radseite einer Achse eine den Federungsweg aufnehmende Stelleinrichtung (43) verbunden ist. die jeweils über eine Druckleitung (34) mit einer Kammer (35, 38) des als Hydraulikzylinder (30) ausgebildeten Stellglieds (4) verbunden ist und die Zuführung des Mediums zum Zylinder (30) über eine Pumpe (42) erfolgt.

## Claims

1. A device for the active camber and/or track-width adjustment of a motor-vehicle wheel (12) **[***sic - recte* 2?] by way of an adjustment device (3) comprising a control member (4), wherein wheel-guide members (8 and 12) are articulated to a wheel support (6) and are held pivotably on the vehicle body, and the control member (4) is connected by way of an attached intermediate member (13) to the wheel support (6) so as to act upon the said wheel support (6) in an adjusting manner, **characterized in that** the intermediate member (13) is articulated in a tiltable manner directly to the wheel support (6) by way of a central ball-and-socket joint (14) and is connected by way of a first bearing (18) to a control rod (5) of the adjustment device (3) and by way of a second bearing (16) to a wheel-guide member (12), wherein the adjustment device (3) comprises a control member (4) connected to the control rod (5) and adapted to be movable in and out as a function of travelling parameters such as the wheel springing path (**F**), the transverse acceleration (**Q**), the velocity (**V**), the longitudinal acceleration (**B**), the retardation (**L**), the yawing (**G**) and the steering-lock angle (**W**) by way of a control unit (40) so as to control the setting of the wheel, and the wheel (12) is adjustable about a pivot axis (**X-X**) formed below the rotational axis (11) of the wheel by a track-rod joint (9) on the wheel support and a support-arm joint (7) on the wheel support.

2. A device according to Claim 1, **characterized in that** the control rod (5) is held on the intermediate member (13) which is articulated to the wheel support (6) and the upper free end of which holds the control rod (5) in an articulated manner in the first bearing (18) with the axis (**Y-Y**) and the lower free end of which supports the wheel-guide support arm (12) in the second bearing (16) with the pivot axis (**Z-Z**).

3. A device according to Claim 1, **characterized in that** the control rod (5) is held on the intermediate member (13) which is articulated to the wheel support (6) and the upper free end of which supports the wheel-guide support arm (12) in the second bearing (16) and the lower free end of which holds the control rod (5) in an articulated manner in the first bearing (18).

4. A device according to Claim 1, 2 or 3, **characterized in that** an intermediate lever (20) comprising two arms (20a and 20b) at an angle (β) with respect to each other is arranged between the control member (4) and the control rod (5).

5. A device according to Claim 4, **characterized in that** the intermediate lever (20) with the arms (20a and 20b) at differing angles (β) with respect to each other is associated with each wheel end of an axle between the control rod (5) and the control member (4).

6. A device according to Claim 1, **characterized in that** the setting of the pivot axis (**X-X**) can be determined by the position of the joint (7) of the lower wheel-guide support arm (8) on the wheel support and by the position of the joint (9) of the track rod (10) on the wheel support and a ratio of the camber to the toe-in can be set on the wheel (2) in a defined manner.

7. A device according to Claim 1 and one of the preceding Claims, **characterized in that** in order to adjust the toe-in on the wheel (2) the pivot axis (**X-X**) has a setting **α = 90°.**

8. A device according to Claim 1, **characterized in that** the control member (4) is mounted in a plane situated below the rotational axis (11) of the wheel and is connected to a two-armed lever (23) extending in a substantially vertical plane and connected at the free end thereof remote from the mounting of the control member (4) to the control rod (5) articulated to the wheel support (6) by way of the bearing (18) above the rotational axis (11) of the wheel.

9. A device according to one of the preceding Claims, **characterized in that** an adjustment device (43) absorbing the springing path and connected by way of a compressed-air line (34) to a chamber (35, 38) of the control member (4) constructed in the form of an hydraulic cylinder (30) is connected at each wheel end of an axle to the wheel-guide support arm (8) arranged below the rotational axis (11) of the wheel, and the medium is supplied to the cylinder (30) by way of a pump (42).

## Revendications

1. Dispositif de réglage actif du carrossage et/ou de la voie d'une roue de véhicule (12) par l'intermédiaire d'un dispositif de réglage (3) comprenant un organe de positionnement (4), dans lequel des organes de guidage de roue (8 et 12) s'articulent sur un support de roue (6) et sont fixés pivotants sur la carrosserie du véhicule et l'organe de positionnement (4) est relié au support de roue (6) de manière à régler celui-ci, par un élément intermédiaire (13) attenant, caractérisé en ce que l'élément intermédiaire (13) s'articule de manière à pouvoir basculer directement sur le support de roue (6), par un joint sphérique (14) central et est relié à un organe de guidage de roue (12), par un premier palier (18) avec une tige de commande (5) du dispositif de réglage (3) et par un second palier (16) ; le dispositif de réglage (3) comprenant un organe de positionnement (4) qui est relié à la tige de commande (5) et étant conçu de manière à pouvoir être extrait et introduit en influençant la position de la roue, par une unité de commande (40), en fonction de paramètres de marche tels que la course élastique de la roue (F), l'accélération transversale (Q), la vitesse (V), l'accélération longitudinale (B), le ralentissement (L), les lacets (G) et l'angle de braquage (W) ; et la roue (12) étant réglable autour d'un axe de pivotement (X-X) formé au-dessous de l'axe de rotation de la roue (11) par une articulation de la barre d'accouplement (9) et une articulation du bras oscillant (7) côté support de roue.

2. Dispositif selon la revendication 1, caractérisé en ce que la tige de commande (5) est fixée sur l'élément intermédiaire (13) articulé sur le support de roue (6), lequel élément intermédiaire maintient à son extrémité libre supérieure la tige de commande (5) articulée dans un premier palier (18) avec l'axe (Y-Y) et, à son extrémité libre inférieure, soutient le bras oscillant de guidage de roue (12) dans le second palier (16) avec l'axe de pivotement (Z-Z).

3. Dispositif selon la revendication 1, caractérisé en ce que la tige de commande (5) est fixée sur l'élément intermédiaire (13), articulé sur le support de roue (6), lequel élément intermédiaire soutient à son extrémité libre supérieure le bras oscillant de guidage de roue (12) dans le second palier (16) et, à son extrémité libre inférieure, maintient la tige de commande (5) articulée dans le premier palier (18).

4. Dispositif selon les revendications 1, 2 ou 3, caractérisé en ce qu'entre l'organe de positionnement (4) et la tige de commande (5) il est prévu un levier intermédiaire (20) qui comporte deux bras (20a et 20b), formant entre eux un angle (β).

5. Dispositif selon la revendication 4, caractérisé en ce qu'à chaque côté de roue d'un essieu est associé, entre la tige de commande (5) et l'organe de positionnement (4), le levier intermédiaire (20) avec les bras (20a et 20b) qui forment entre eux des angles (β) différents.

6. Dispositif selon la revendication 1, caractérisé en ce que l'inclinaison de l'axe de pivotement (X-X) par rapport à la position de l'articulation (7) côté support de roue du bras oscillant de guidage de roue (8) inférieur et par rapport à la position de l'articulation (9) côté support de roue de la barre d'accouplement (10) peut être déterminé et un rapport entre le carrossage et le pincement sur la roue (2) peut être fixé de manière définie.

7. Dispositif selon la revendication 1 et l'une des revendications précédentes, caractérisé en ce que pour obtenir un réglage du pincement sur la roue (2), l'axe de pivotement (X-X) présente une inclinaison α = 90 degrés.

8. Dispositif selon la revendication 1, caractérisé en ce que l'organe de positionnement (4) est monté dans un plan au-dessous de l'axe de rotation de la roue (11) et est relié à un levier (23) à deux bras qui s'étendent dans un plan à peu près vertical et est relié, avec son extrémité libre tournée à l'opposé de l'appui de l'organe de positionnement (4), avec la tige de commande (5) qui est articulée sur le support de roue (6), par le palier (18), au-dessus de l'axe de rotation de la roue (11).

9. Dispositif selon l'une des revendications précédentes, caractérisé en ce qu'avec le bras oscillant de guidage de roue (8), placé au-dessous de l'axe de rotation de la roue (11), de chaque côté de roue d'un essieu, est relié un dispositif de réglage (43), absorbant le parcours élastique, qui communique, par une conduite de pression (34), avec une chambre (35, 38) de l'organe de positionnement (4) conçu comme un vérin hydraulique (30) et en ce que l'arrivée du fluide au cylindre (30) s'effectue au moyen d'une pompe (42).
